# EUROPEAN PATENT APPLICATION

(11) **EP 3 484 212 A1**
(43) Date of publication of application: **15.05.2019**
(21) Application number: 17200889.8
(22) Date of filing: 09.11.2017
(51) Int. Cl.: H04W 48/20, H04W 48/12

(54) **METHOD FOR SERVICE-BASED CELL SELECTION**

(71) Applicant: Gemalto M2M GmbH, 81541 Munich (DE)
(72) Inventor: BREUER, Volker, 16727 BOETZOW (DE); WEHMEIER, Lars, 14612 FALKENSEE (DE)
(74) Representative: Grevin, Emmanuel

(57) **Abstract**

The present invention relates to a method for a user equipment operating in a cellular network comprising a plurality of base stations providing different network services, at least one of the base stations being configured to signal the supported network services to at least one camping user equipment, whereby the user equipment maintains a list of network services it is configured to receive, for selection of one of the base stations by the user equipment for camping the method comprising the steps of:
- determining the next expected service out of the list of network services, based on at least one operating parameter of the user equipment,
- evaluating the signals received from at least two base stations with respect to the supported network services of the respective base stations,
- selecting the base station by considering the support of the next expected service.

## Description

### FIELD OF THE INVENTION

The present invention relates to a method for service-based cell selection The invention also pertains to a user equipment using said method.

### BACKGROUND OF THE INVENTION

Generally, in the field of wireless communication user equipments operating in cellular networks have since the early stages of technology evolvement selected when operating in idle mode the appropriate cell resp. base station based on suitability criteria. Such suitability criteria are above all governed by the signal strength of the base station received at the user equipments receiver circuitry resp. antenna.

Such approach worked well for 2G and 3G networks, and for the early stages of 4G (LTE). However, the approach does rely on the fact that each and every base station is sufficiently equipped to serve for each and every standard compliant user equipment.

With LTE and moreover with the next generation technology standard 5G resp. New Radio (NR) this principle is not valid anymore. User equipments differ, as for the later releases of LTE new device categories CAT-1, CAT-M, CAT-NB-IoT have been introduced. With those different categories different means of signalling between user equipments are needed.

Latest with 5G this trend has even evolved, as here different base stations are configured to provide different services to the camping user equipments. First approaches in the standardization groups have been discussed, as to figure out for a user equipment which base station will best fit to the service of interest.

All such approaches however base on the assumption, that a user equipment wants to consume one service of interest, and needs to find the best base station for this service.

But this assumption does not fully reflect the reality. For many machine-type user equipments more than one service is of interest - if not at the same time, or all the time, then at least from time to time. A cell selection considering only one service would therefore lead to the undesirable situation, that the user equipment camps on the wrong base station for a respective service request.

It is therefore the goal of present invention to overcome the mentioned disadvantages and to propose a solution for an improved cell selection for a user equipment. Further alternative and advantageous solutions would, accordingly, be desirable in the art.

### SUMMARY OF THE INVENTION

For this it is according to a first aspect of the invention suggested a method for a user equipment according to claim 1. It is further suggested according to a second aspect of the invention a user equipment according to claim 8.

According to the first aspect of the invention it is proposed a method for a user equipment operating in a cellular network comprising a plurality of base stations providing different network services, at least one of the base stations being configured to signal the supported network services to at least one camping user equipment, whereby the user equipment maintains a list of network services it is configured to receive, for selection of one of the base stations by the user equipment for camping the method comprising the steps of:
- determining the next expected service out of the list of network services, based on at least one operating parameter of the user equipment,
- evaluating the signals received from at least two base stations with respect to the supported network services of the respective base stations,
- selecting the base station by considering the support of the next expected service.

The invention relates to a user equipment for communication according to one of the known wireless technology standards, like 3G, 4G or beyond. The user equipment is equipped with the necessary circuitry for communicating over the air interface with the base stations, resp. eNodeBs of the cellular network. This comprises in particular transceiver circuitry, including receiving and transmitting capabilities. According to the circuitry also a separate structural design of transmitting circuitry and receiving circuitry is encompassed by the inventive user equipment. This in particular relates to a radio modem connected to a device.

The user equipment resp. its transceiver is configured to receive and decode signals from base stations.

The user equipment maintains a list of network services, which relate to those network services, where the user equipment is capable of receiving it.

Before the user equipment is operating with a base station, it requires to select that base station that fits best for the user equipment at the current time. This procedure is known under the term cell-selection. Basically the base station is selected for first access, afterwards a re-evaluation is taking place e.g. for a moving base station, hence a cell-reselection may happen at a later point in time. Generally the procedures carried out for cell-selection and cell-reselection are similar, if not the same. For the sake of simplification in the following the term cell-selection is used, but also encompassing the meaning of a cell-reselection.

Said network services are provided by the cellular network and made available to the user equipment by means of base stations. Not each base station might support each network service which is generally available at the cellular network.

Hence the inventive method has the task to take into account this situation and provide a cell-selection considering the network services available at the base station.

For doing so it is however first carried out the step of determining the next expected service for the user equipment out of the list of network services supported by the user equipment.

The next expected service in particular differs from the network service which was used the last time, when a service was requested from the cellular network. It may be the immediate service where the user equipment is supposed to request, in particular when in idle mode or before registration. E.g. in case of a voice call that is going to be launched, the next expected service is said voice call service.

Preferably the respective network service belonging to the group of:
- voice over packet based service,
- data transmission,
- early data transmission,
- multimedia streaming,
- enhanced coverage operation,
- power efficient data transmission,
- positioning.

Compared to legacy networks like GSM, where only voice over the circuit switched network was possible, later enhanced by a packet switched network for data connections, today's and the future cellular networks provide a wide amount of network services.

Starting with VoLTE a voice service over packet switched network, resp. the IP multimedia subsystem (IMS) is meanwhile offered for LTE. For future technology standards it is very likely that a similar resp. compatible voice service will be available. The same subsystem is also used for multimedia streaming, like videos etc.

The common data transmission is for IP based communication unchangedly of high importance.

For user equipments belonging to the Internet-of-Things (IoT) sphere certain network services for lower hardware capacities of user equipments resp. transceivers are designed, in particular in the area of LTE Cat-1, Cat-M, or Cat-NB-IoT. This comprises network services like power efficient data transmission, enhanced coverage operation (EC) and early data transmission for reducing signaling load and saving power.

Additional network services comprise in particular location-based support, mainly cellular network based positioning, means determination of a geo-location without separate sensors e.g. for GNSS based positioning.

According to the invention the next expected service is determined based on at least one operating parameter of the user equipment.

According to a preferred embodiment the operating parameter is one or a combination out of the group of:
- time staying in idle mode,
- battery capacity,
- service scheduling plan,
- history of service usage,
- periodicity of services in use,
- time elapsed since power up,
- mobility status.

The time staying in idle mode is an advantageous operating parameter for polling of data transmissions, e.g. for instructions. The same is in particular true for a connected car entertainment unit, as it is when driving more prone for data intense usage, as multimedia streaming - preferably for rear seat entertainment purposes - voice over packet based service etc. Once the car stands still, the radio modem is still expected to be active, but only for getting messages from a remote center, e.g. for switching on climate control etc., and for theft alarm resp. tracking. So, the radio modem of the car entertainment unit then prefers to operate according to a power efficient data transmission service. This network service differs dramatically from the intense data transmission service when driving.

Preferably this operating parameter is used in combination with the mobility status of the car, that means if it is stationary or moving, in particular since a while, e.g., since the car is in idle mode.

Likewise the time elapsed since power up is in particular relevant to user equipments checking for content or software updates. In particular for a connected car entertainment unit after a defined time it is useful to check for an update of traffic information.

For other use cases a voice call might be appropriate, e.g. for a delivery car for getting instructions.

Further the battery capacity as operating parameter is in particular of relevance for network services like power efficient data transmission. When the battery capacity reaches a predefined threshold it is advantageous for a user equipment to switch to a base station which supports power efficient data transmission.

For some of said operating parameters resp. services it is advantageous to maintain a service scheduling plan. This is useful as operating parameter as it defines times and days for special service usages, like sending measured data to a remote service center, for a metering device. Such service plan in particular may comprise several services, e.g. requesting for software updates once a week compared to daily sending of measurement data.

This also relates in a stripped down variant to the history of service usage and the periodicity of network services in use. These are advantageously not necessarily predefined schedules, but are derived from recent usage of the user equipment. By this history a certain periodicity is preferably derived and is advantageously applied as operating parameter.

According to the invention the user equipment further figures out the capabilities of at least two base stations in terms of service support. Such information are extracted from signals provided by the respective base stations. This is in particular carried out by a broadcast transmission, e.g. by system information block (SIB) broadcast from the base station. By this the user equipment has means to retrieve such signals without camping on a base station.

It is by now known as part of the common cell-selection process that a user equipment is regularly checking the availability of other base stations of the same cellular network, in order to figure out, if a cell-(re)selection to a better suited base station is necessary. Such "suitability" was by now only reckoned based on the signal strength.

With the inventive method the user equipment additionally determines from the received signals, which network services the base stations in proximity are supporting.

When there is a match between the next expected service and the supported network services of at least one base station, then this base station is considered for camping.

When more than one base station in reach is supporting said next expected service, then other criteria, in particular the known suitability criteria are applied in order to figure out, on which base station the user equipment is going to camp.

In that sense, the match between the supported network services and the next expected service is part of the suitability check for cell-selections.

The inventive approach is advantageous as it saves time, efforts and network signalling capacity, when the user equipment by itself detects which base station is the right one for carrying out a respective service. Without such approach a user equipment would carry out a cell-selection following the known signal-strength driven suitability criterion, camp on a base station, try to launch a network service and figure out that this base station does not support that network service. With or without network assistance an appropriate base station would then needed to be selected. All such disadvantageous steps are in vain when following the inventive method.

If none of the base stations supports the next expected service, but at least one is decodable with sufficient signal strength, preferably the user equipment will camp on this base stations, but will fail to establish its next expected service. For the respective network service the user equipment is then practically in an area with no reception (also called: coverage hole), but it is better coped by camping and asking for alternative services than to handle this on initial cell-selection level in out-of-service mode. This situation is similar to an unexpected service occurrence, which would have to be handled as well in a network.

Preferably for the user equipment it is advantageous if not only exactly one supported network service is taken into account for the cell-selection.

According to another preferred embodiment it is proposed that the list of network services further comprises a priority value for at least one of the network services, and the next expected service is the service with the highest priority value, the method further comprising the step of determining the priority value of at least one network service in the list of network services based on said at least one operating parameter.

In this embodiment the supported network services are equipped with a priority value.

By considering the operating parameter the priority value of the services might be changed. That is, when at least one operating parameter changes, the priority value of at least one of the network services in the list of supported services might change as well.

For this purpose preferably regularly resp. timer triggered the operating parameter are evaluated and if necessary, one or more of the priority values are updated. The next expected service is then the network service with the highest priority.

However, with such priority ranking of services within the user equipment a more forward-looking cell-selection is possible to be carried out. Given that two base station are in reach with a comparable signal strength, and both supporting the next expected service, according to the priority list, it is proposed in a preferred embodiment that the step of selecting the base station further comprises considering the priority value of at least two network services.

When the first of the two base stations further supports the network service ranked second or third, while the second base station only supports the next expected service, then the cell-selection should lead to a cell-selection of the first base station.

This is in particular advantageous when according to the service scheduling it is known that at a certain point in time a firmware update download is due, while up to then only power efficient data transmissions are carried out. For such power efficient data transmission it is in particular foreseen that only small messages are already transmitted during connection setup and hence do not need the full signaling chain and setup of dedicated transmission channel. This network service is called "early data transmission". However, the setup of a dedicated bearer is more beneficial for large data amounts. As the early data transmission service is introduced in higher technology releases it may not be supported by all base stations.

The selection of a base station supporting both power efficient data transmission and regular data transmissions would be favored compared to a base station supporting only regular transmission.

According to another preferred embodiment it is suggested that for determining the priority value the method further comprises considering the highest security needs of the user equipment relative to the requested network service.

This preferred embodiment covers the further capability that the cell reselection does not only take into account if a network service is supported but also how, in particular how secure this network service is provided. According to an advantageous embodiment it is proposed that for determining the priority value of a network service the method further comprises considering at least one service qualification, wherein the service qualification is at least one out of:
- data throughput,
- security,
- tariff,
- power consumption,
- duration.

The priority value is consequently determined taking into account at least one qualification of the network service. Such qualification is in particular a quantifiable value, like the data throughput in volume per time unit.

The qualification governs the priority of a service. E.g. when a bank transfer is supposed to be done, then the data transmission service may be available on a certain base station, but only when sufficient security means are available. E.g. through a GSM based base station not sufficient security can be assured. Hence other technologies in particular the so-called AS-security where acknowledgements on radio level (e.g. by HARQ) are available, may be preferred. Hence the respective higher technology base station would be preferred compared to a GSM/GPRS base station.

When a high security service is expected, then the ranking of a 2G base station will need to be lowered in order to prefer higher technology base stations. Also power consumption thresholds and duration of a network service is another qualification how the network service is to be carried out.

With tariff data a certain service may further be timewise shifted, as long as a certain threshold is not reached. Such tariff data are in particular expected to be very volatile, means nightly data transmission would be much cheaper than during high traffic times, like in rush hours in the evening.

This embodiment is advantageous as for selection of a base station not only availability of a preferred resp. prioritized network service is checked, but also further requirements are taken into account. Hence it helps avoiding a cell-selection on a base station which is still not appropriate, with further time/power-consuming reselections in the following.

According the second aspect of the invention it is proposed a user equipment for operating in a cellular network comprising a plurality of base stations providing different network services, at least one of the base stations being configured to signal the supported network services to at least one camping user equipment, the user equipment comprising receiver and transmitter circuitry for wireless signalling with at least one of said base stations, processing circuitry and memory, whereby the user equipment maintains in the memory a list of network service it is configured to receive,
for selection of one of the base station for camping the processing circuitry is configured to:
- determine the next expected service out of the list of network services, based on at least one operating parameter of the user equipment,
- evaluate the signals received by the receiver circuitry from at least two base stations with respect to the supported network services of the respective base stations,
- select the base station by considering the support of the next expected service.

The second aspect of the invention shares the advantages of the first aspect of the invention.

Advantageously it is suggested in another preferred embodiment a user equipment comprising a communication unit and a control appliance, interconnected by a control interface, wherein the control appliance further comprises a user interface for human interaction, wherein the determination of the next expected services is further considering instructions received from the control appliance over the control interface.

In this embodiment it is proposed a special configuration of the user equipment, comprising a control appliance and a communication unit. The control appliance in that sense is the device that carries a communication unit for providing connectivity. Typically the control appliance is a device designed for certain purposes, like a point-of-sale device, a car entertainment unit, a metering device, a tracking unit or the like.

The control appliance comprises a user interface for human interaction, like a GUI or any other type of display with input facilities.

By using this the user equipment preferably figures out the next expected service from instructions received through the user interface. In that sense, user interface interaction data are used as said operating parameter of the user equipment.

Preferably the base station of the cellular network is configured to transmit signals to a plurality of user equipments indicating the supported at least one service of the base station.

As it is shown this invention advantageously solves the depicted problem and proposes means for on-spot selection of the appropriate base stations. The more base stations are at hand for a user equipment, the better the cell-selection will become by avoiding a trial-and-error selection, as it would be today.

### BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.
- Fig. 1: represents a user equipment of the type to which the present invention is applied as an embodiment in conjunction with cellular network elements;
- Fig. 2: shows a flow diagram depicting an exemplifying embodiment of the inventive method;
- Fig. 3: represents a sequence chart showing another exemplifying embodiment of the inventive method.

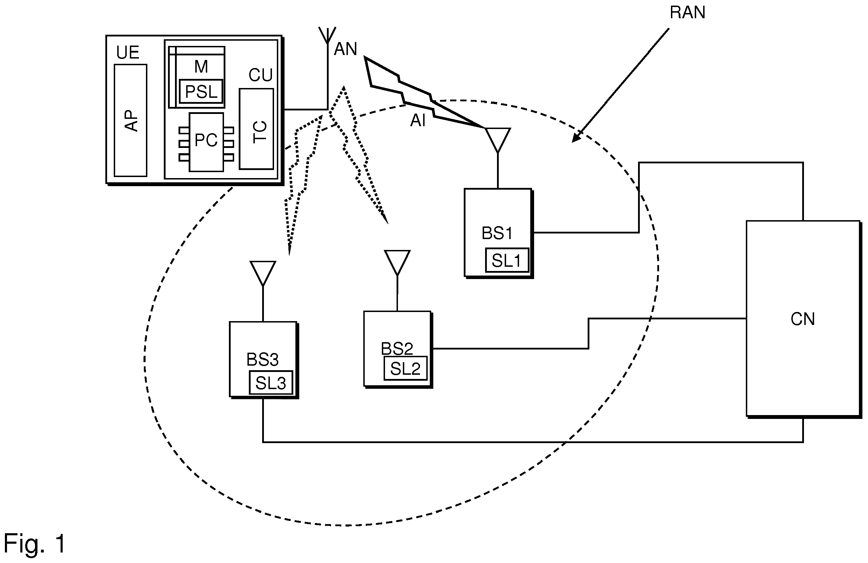

FIG. 1 schematically shows a user equipment UE of the type to which the present invention is applied as an embodiment. The user equipment comprises a couple of components for operating with a cellular network CN.

The user equipment may be any type of device, be it a mobile handset, or a machine type communication (MTC) device, like a car entertainment unit, point-of-sale (POS) device, tracking device, electric meter, health-care monitoring device, vending machine or the like.

Generally the user equipment comprises an control appliance AP and a communication unit CU. The control appliance controls by means of a call interface the communication unit CU. Preferably the communication unit CU represents a radio modem, e.g. in the form of a machine-to-machine module. The communication unit comprises processing circuitry PC, configured for executing operating firmware of the communication unit, resp. the whole user equipment. The firmware is stored in the memory.

As part of this the processing circuitry controls the transceiver TC, which represents the transmitting and receiving circuitry for operating over the air interface AU with base stations BS1, BS2, BS3 of the cellular network, in particular by means of an antenna AN. Such base stations are depending upon the supported technology called BS, nodeB, eNodeB, ngNodeB, NR-RAN or ng-eNB. For simplicity reasons they are called hereinafter base stations without limiting to a special technology.

The user equipment further comprises memory M. This comprises permanent and volatile memory.

In the memory is stored a list of network services which the user equipment is configured to receive, hereinafter preferred service list PLS. This preferred service list preferably also comprises for each of the listed network services a priority value. Preferably such list of services are preconfigured by the manufacturer, in particular the manufacturer of the whole user equipment. Further during operation a used service could be dynamically added to the list of supported network services, when it was not stored in there before.

The base stations BS1, BS2, BS3 are connected to or forming by itself at least one radio access network RAN. In higher technology releases the base stations are forming the RAN independently, while in lower technologies RAN-components, like MME etc. are required. Here it is shown the higher technology release variant.

Each of the base stations further comprises a list of supported network service SL1, SL2, SL3. In this exemplifying embodiment the supported network lists are maintained by the base stations itself. Such lists are preferably populated by the cellular network, resp. updated during maintenance when an update of the respective base station is carried out.

The base stations transmit the content of their supported network service lists to user equipments over the air interface AI, in particular by means of a broadcast, e.g. via SIBs.

The user equipment UE is upon powering up supposed to select an appropriate base station BS. This process is called cell-selection. According to this embodiment of the inventive method this cell-selection is carried out based on a matching of the preferred service list, in particular the next expected service and the received supported network service lists SL1, SL2, SL3 of the available base stations BS1, BS2, BS3. The procedure is applicable for a cell-reselection accordingly.

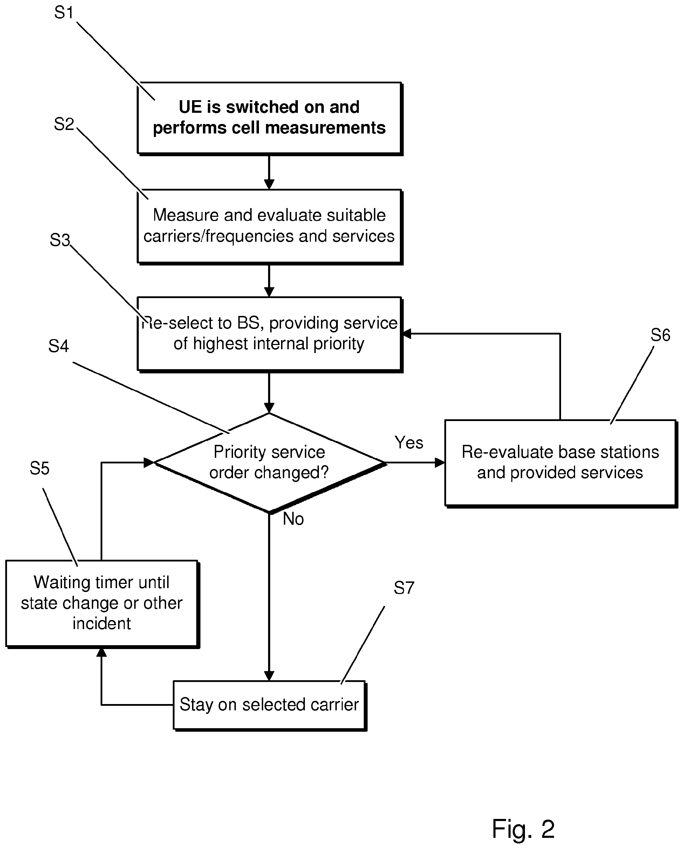

In FIG. 2 it is described according to an exemplifying embodiment the process flow for a first cell selection after powering up a user equipment UE.

In step S1 the user equipment is powered up, and consequently the user equipment tries to register in a cellular network - in particular its home cellular network - as soon as possible.

For doing so it needs to determine which base station would be the best for registration. To do so the next step S2 is to perform measurements for identifying base station signals in the surrounding up to a decodability threshold. When applying the situation of Fig. 1, then the UE detects measurable signals from three base stations. For the sake of simplicity no base stations from other cellular networks, where the user equipment is not eligible to camp on, are assumed to be around in this example.

When a couple of base stations are identified by its signals, then the user equipment measures suitability of the signals and retrieves the supported network services from each base station. Preferably such service support information are provided by means of a broadcast, in particular the system information (SI).

For the evaluated base stations it is then checked if the supported services match with the preferred service list PSL of the user equipment. In particular the highest priority service is supposed to be the next expected service, hence a base station which supports that next expected service is considered for camping. This is carried out in step S3. Here preferably also the signal strength is considered, in particular when two of the found base stations support the highest priority network service, then the base station with the higher signal strength is selected.

Consequently the user equipment registers on the selected base station and camps on it afterwards.

During the following operation, it is then checked in decision step S4 if a change of the priority order of the preferred service list has happened. This may happen through a change of an operating parameter, e.g. operating in idle mode for a certain time.

When such a change is detected, the workflow branches to step S6, where based upon the priority change it is checked if another base station would be more appropriate due to the change of priority. In this step further qualifications of services are considered.

With the result the workflow returns to step S3 where depending upon the outcome of step S6 the user equipment remains on the base station where it already camps, or a cell-reselection is carried out. Preferably a hysteresis is also applied in this step in order to avoid a ping-pong between two base stations which provide the same services with a similar received signal strength at the user equipments antenna.

Should no change be detected in step S4 the process flow branches to step S7, by continuing on the same base station. In step S5 a timer or other trigger is monitored until the next check of a change of service priority of the user equipment is carried out in step S4.

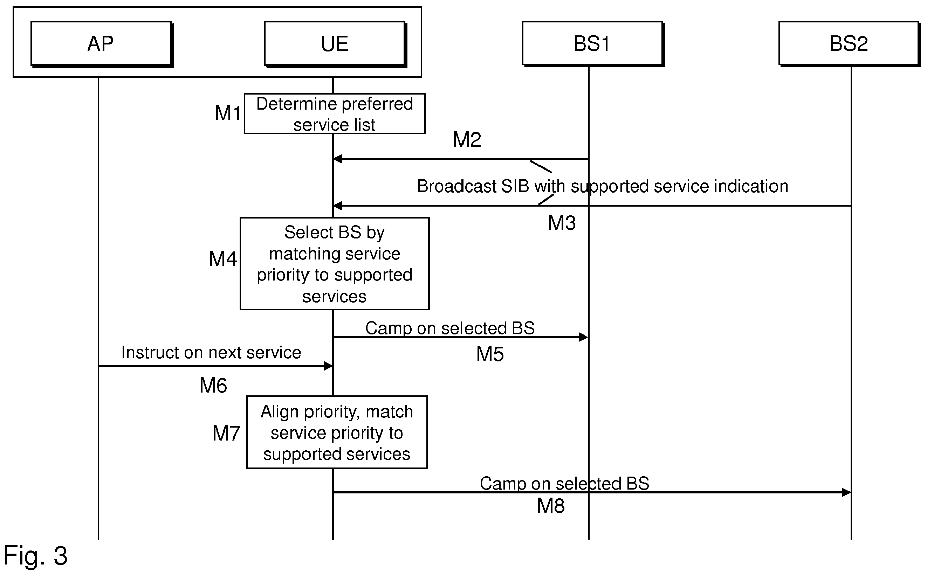

What might provoke a cell change is depicted in the sequence diagram of FIG. 3. Here the interaction between a user equipment, which is connected with a control appliance, and two base stations is exemplarily depicted.

It starts in M1 with the task for the user equipment UE of determining the preferred service list PSL, in particular with a priority assigned to the listed network services. Preferably the list of services is permanently stored in the memory of the user equipment, while the priority of the supported network services is dynamically assigned. Such priority may be stored in volatile memory.

The following messages M2 and M3 from base stations BS1 and BS2 are retrieved at the user equipment UE. Preferably such messages are transmitted by means of a broadcast. Messages from more than the two shown base stations are preferably retrieved, but for simplicity reasons not shown. Those messages comprise indications relating to supported services of the respective base stations BS1, BS2.

In step M4 the user equipment UE selects an appropriate base station from the two base stations, by matching with the preferred service list, that means when the highest priority service is supported by a base station, this base station is a candidate for cell-reselection. Should more than one decodable base stations support the highest priority service, then the base station with the best signal strength is selected.

The priority of a service is in particular governed by operating parameter of the user equipment. Such operating parameter comprise parameter in the environment of the user equipment and its behaviour in the cellular network. A change of operating parameter might lead to a change in the priorities of the supported network services of the user equipment.

One of the operating parameter relates to instructions from the control appliance AP of the user equipment. As the highest priority service is the next expected service, then an instruction M6 from the control appliance to the user equipment - in particular following an interaction with the user interface of the control appliance - to launch a special network service makes this network service - e.g. a VoLTE call - the next expected service.

Consequently in M7 the user equipment aligns its priority according to the received instructions resp. the amended operating parameter. When the priority change is effected, then it needs to be checked based on the latest measurements from base station signals (not shown), which of the available base stations would best match the new priority.

As it is shown here, this match leads to another result than in M4. This is in particular because BS1 supports data transmissions, but no VoLTE. Now with an instruction to launch a VoLTE call (soon), the user equipment decides that base station BS2, which is capable of supporting VoLTE is the better choice. Consequently the user equipment sends message M8 to base station BS2, requesting a cell-reselection from BS1 to BS2.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method for a user equipment (UE) operating in a cellular network (CN) comprising a plurality of base stations (BS1, BS2, BS3) providing different network services, at least one of the base stations being configured to signal the supported network services to at least one camping user equipment, whereby the user equipment maintains a list of network services (PSL) it is configured to receive,
for selection of one of the base stations by the user equipment for camping the method comprising the steps of:
- determining the next expected service out of the list of network services, based on at least one operating parameter of the user equipment,
- evaluating the signals received from at least two base stations with respect to the supported network services of the respective base stations,
- selecting the base station by considering the support of the next expected service.

2. Method according to claim 1,
wherein the list of network services (PSL) further comprises a priority value for at least one of the network services, and the next expected service is the service with the highest priority value,
the method further comprising the step of determining the priority value of at least one network service in the list of network services based on said at least one operating parameter.

3. Method according to claim 2,
wherein the step of selecting the base station (BS) further comprises considering the priority value of at least two network services.

4. Method according to at least one of the claims 1 to 3,
wherein the at least one operating parameter comprises at least one out of:
- time staying in idle mode,
- battery capacity,
- service scheduling plan,
- history of service usage,
- periodicity of services in use,
- time elapsed since power up,
- mobility status.

5. Method according to at least one of the claims 2 or 4, wherein for determining the priority value the method further comprises considering the highest security needs of the user equipment (UE) relative to the requested network service.

6. Method according to at least one of the claims 2 to 5, wherein for determining the priority value of a network service the method further comprises considering at least one service qualification, wherein the service qualification is at least one out of:
- data throughput,
- security,
- tariff,
- power consumption,
- duration.

7. Method according to at least one of the previous claims, wherein the respective network service is at least one out of:
- voice over packet based service,
- data transmission,
- early data transmission,
- multimedia streaming,
- enhanced coverage operation,
- power efficient data transmission,
- positioning.

8. User equipment (UE) for operating in a cellular network (CN) comprising a plurality of base stations (BS1, BS2, BS3) providing different network services, at least one of the base stations being configured to signal the supported network services to at least one camping user equipment, the user equipment comprising receiver and transmitter circuitry (TC) for wireless signalling with at least one of said base stations, processing circuitry (PC) and memory (M), whereby the user equipment maintains in the memory a list of network service (PSL) it is configured to receive,
for selection of one of the base station for camping the processing circuitry (PC) is configured to:
- determine the next expected service out of the list of network services, based on at least one operating parameter of the user equipment,
- evaluate the signals received by the receiver circuitry from at least two base stations with respect to the supported network services of the respective base stations,
- select the base station by considering the support of the next expected service.

9. User equipment (UE) according to claim 8,
wherein the list of network services (PSL) further comprises a priority value for at least one of the network services, and the next expected service is the service with the highest priority value,
the user equipment being further configured to determine the priority value of at least one network service in the list of network services based on said at least one operating parameter.

10. User equipment (UE) according to at least one of the claims 8 and 9, wherein the at least one operating parameter comprises at least one out of:
- time staying in idle mode,
- battery capacity,
- service scheduling plan,
- history of service usage,
- periodicity of services in use,
- time elapsed since power up,
- mobility status.

11. User equipment (UE) according to at least one of the claims 9 or 10, wherein for determining the priority value the user equipment is further configured to consider the highest security needs of the user equipment relative to the requested network service.

12. User equipment (UE) according to at least one of the claims 9 to 11, wherein for determining the priority value of a network service the user equipment is further configured to consider at least one service qualification, wherein the service qualification is at least one out of:
- data throughput,
- security,
- tariff,
- power consumption,
- duration.

13. User equipment (UE) according to at least one of the claim 8 to 12, wherein the respective network service is at least one out of:
- voice over packet based service,
- data transmission,
- early data transmission,
- multimedia streaming,
- enhanced coverage operation,
- power efficient data transmission,
- positioning.

14. User equipment (UE) according to claim 8,
comprising a communication unit and a control appliance (AP), interconnected by a control interface, the control appliance (AP) further comprising a user interface for human interaction,
wherein the determination of the next expected services is further considering instructions received from the control appliance over the control interface.
